# FASCICULE DE BREVET EUROPEEN

(11) **EP 1 171 274 B1**
(45) Date de publication et mention de la délivrance du brevet: **06.08.2003**
(21) Numéro de dépôt: 00912715.0
(22) Date de dépôt: 17.03.2000
(51) Int. Cl.: B29C 45/14, C09J 7/02, C08J 5/12, B29C 37/00

(54) **PROCEDE DE FABRICATION D'UNE PIECE EN SILICONE DESTINEE A ETRE COLLEE**
HERSTELLUNG EINES SILIKONTEILES ZUM AUFKLEBEN
METHOD FOR MAKING A SILICONE COMPONENT DESIGNED TO BE BONDED

(30) Priorité: 19.03.1999 FR 9903466
(43) Date de publication de la demande: 16.01.2002
(73) Titulaire: THALES AVIONICS S.A., 78140 Vélizy-Villacoublay (FR)
(72) Inventeur: CHEVALLIER, Yves, Thomson-CSF, F-94117 Arcueil Cedex (FR); VENENCIE, Christophe, Thomson-CSF, F-94117 Arcueil Cedex (FR); LABILLE, Christophe, Thomson-CSF, F-94117 Arcueil Cedex (FR)
(74) Mandataire: Albert, Claude
(86) Numéro de dépôt international: FR0000665
(87) Numéro de publication internationale: WO00056516

(56) Documents cités:
- EP-A- 0 878 285
- PATENT ABSTRACTS OF JAPAN vol. 015, no. 160 (M-1105), 22 avril 1991 (1991-04-22) & JP 03 030921 A (YAMAHA CORP), 8 février 1991 (1991-02-08)
- PATENT ABSTRACTS OF JAPAN vol. 018, no. 145 (C-1178), 10 mars 1994 (1994-03-10) -& JP 05 320592 A (NITTO DENKO CORP), 3 décembre 1993 (1993-12-03) -& DATABASE WPI Week 199403 Derwent Publications Ltd., London, GB; AN 1994-018638 XP002140611

## Description

L'invention concerne toutes les pièces moulées, en silicone, destinées à être montées par collage sur un support, par exemple pour constituer un joint d'étanchéité.

Il est connu que les pièces en silicone ne peuvent être collées qu'avec une colle à base de silicone, cette dernière n'adhérant à la pièce en silicone que si elle polymérise après avoir été mise en contact avec la pièce.

Il est connu d'utiliser des pièces moulées, en silicone, pour servir de joint d'étanchéité, de joint de blocage, d'amortisseur, de butée...

II est connu de, soit mouler préalablement la pièce puis de la coller sur son support, soit de surmouler directement la pièce sur son support.

Dans le cas du moulage préalable de la pièce suivi d'un collage, une couche de colle au silicone est déposée sur le support à l'endroit où doit être placée la pièce moulée en silicone, puis la pièce moulée est positionnée et il faut attendre que la colle polymérise. Ce procédé de collage présente divers inconvénients : - le temps de polymérisation de la colle est long - la nécessité d'un outillage spécifique de positionnement de la pièce et cet outillage est immobilisé pendant que s'effectue la polymérisation - la difficulté d'avoir une couche de colle d'épaisseur régulière et qui ne déborde pas.

Dans le cas du surmoulage, une fine couche de colle au silicone, ou plus précisément un primaire d'adhésion, est déposée sur le support à l'endroit où doit être située la pièce moulée en silicone. Cette couche est ensuite laissée à sécher pendant une durée variant de l'ordre de un à trois quarts d'heures selon sa constitution et la température ambiante. Un moule dont l'empreinte creuse correspond à la pièce en silicone vient coiffer la partie encollée et de la résine ou silicone est injectée dans le moule. Après polymérisation de la résine, le moule est retiré. Ce procédé de collage présente lui aussi des inconvénients : - l'attente que la couche de primaire d'adhésion sèche - l'attente, encore plus longue, que la polymérisation s'effectue, pendant cette attente le moule immobilisé ne peut être employé ailleurs, or il s'agit d'un moule souvent complexe et coûteux.

La présente invention a pour but d'éviter ou, pour le moins, de réduire ces inconvénients, en proposant un procédé de fabrication qui aboutit à un ensemble autocollant.

L'invention concerne un procédé de fabrication d'une pièce en silicone destinée à être fixée à une autre pièce par collage. ladite pièce de silicone se présentant à la fin du procédé sous la forme d'un ensemble auto-collant caractérisé en ce qu'il comporte au moins les étapes suivantes :
* utiliser un moule ayant une empreinte creuse dont les dimensions sont sensiblement égales à celles de l'ensemble auto-collant,
* utiliser des moyens de collage constitué d'un empilement comportant successivement au moins une feuille de protection, une couche d'un premier adhésif, une feuille, et une couche d'un deuxième adhésif, ledit deuxième adhésif étant à base de silicone,
* disposer lesdits moyens d'adhésion dans ledit moule, la feuille de protection étant en contact avec une des parois de l'empreinte creuse,
* introduire une résine de silicone dans l'espace laissé libre à l'intérieur du moule par lesdits moyens d'adhésion,
* polymériser l'ensemble autocollant formé des moyens d'adhésion et de la résine de silicone puis le démouter.

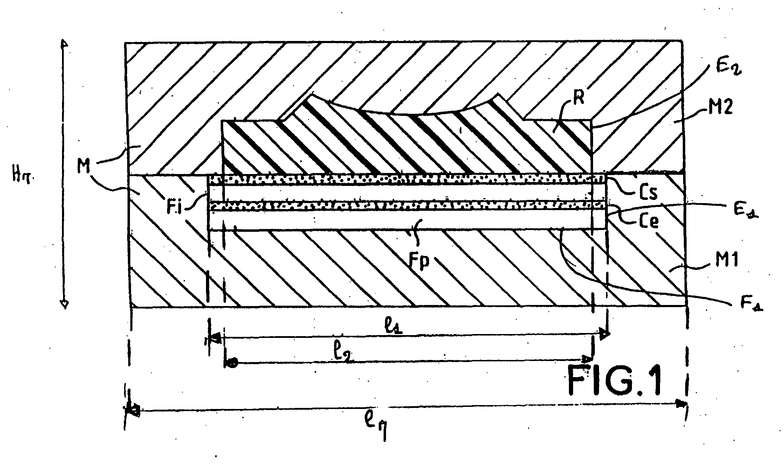

L'invention sera mieux comprise et d'autres caractéristiques apparaîtront à l'aide de la description ci-après et de la figure 1 s'y rapportant qui représente, vus en coupe, des moyens mis en oeuvre dans le procédé.

Afin de permettre un collage rapide d'une pièce en silicone sur une autre pièce sans entraîner un long temps d'immobilisation du matériel de positionnement utilisé lors d'une fabrication à l'échelle industrielle, il est proposé ci-après de réaliser des ensembles autocollants où la pièce en silicone est associée à un autocollant double face, lors de son moulage.

Les techniques de moulage étant supposées être connues du lecteur, certains détails tels que l'injection de résine dans un moule ou le maintien d'une feuille contre la paroi interne d'un moule par aspiration, seront mentionnés sans rentrer dans les détails de réalisation.

Les pièces en silicone réalisées selon le procédé peuvent être soit des pièces directement moulées aux dimensions désirées, soit des plaques prévues pour être découpées par la suite aux dimensions désirées.

La figure 1 représente, une vue en coupe transversale, un ensemble autocollant et un moule, M, utilisé pour la fabrication de l'ensemble autocollant.

Le moule M est formé de deux demi-coquilles M1, M2 qui, lorsqu'elles sont accolées, comme représenté sur la frgure, constituent une enceinte avec, à l'intérieur, un espace délimité par « l'empreinte creuse» (E1, E2) du moule. Les dimensions de l'empreinte creuse correspondent sensiblement aux dimensions de l'ensemble autocollant à obtenir.

L'ensemble autocollant, tel qu'il apparaît sur la figure, est constitué par un empilement comportant successivement une feuille de protection Fp, une couche Ce d'un premier adhésif, une feuille intermédiaire Fi, une couche Cs d'un second adhésif, la pièoe R en résine de silicone.

Le procédé de fabrication consiste, après avoir réalisé le moule M, à se procurer l'adhésif double face, Ce + Fi + Cs, avec sa feuille de protection Fp. L'adhésif de la couche Cs est un produit compatible avec le silicone, c'est-à-dire un adhésif à base de silicone. Les produits utilisés dans le procédé sont choisis pour être compatibles avec les caractéristiques mécaniques, thermiques, chimiques, etc... de l'ensemble autocollant désiré. L'exemple de réalisation qui a servi à la présente description sera commenté plus en détail dans ce qui suit.

Au cours d'une étape du procédé, l'adhésif double face (Ce+Fi+Cs) est placé dans la demi-coquille M1 avec la feuille de protection Fp en contact avec le fond F1 de l'empreinte E1. Lès dimensions de l'empreinte E1 de la demi-coquille M1 correspondent sensiblement aux dimensions de l'ensemble de l'adhésif double face et de la feuille de protection Fp. La face de la couche Cs qui se trouve la plus éloignée du fond F1 arrive sensiblement au ras de la face de la demi-coquille M1 qui se trouve au contact de la demi-coquille M2.

La demi-coquille M1 est percée de plusieurs conduits d'aspirations non représentés sur la figure. Il s'agit, de manière classique en technique de moulage, de trous très fins qui traversent la demi-coquille M1 et débouchent dans le fond F1 de l'empreinte creuse E1 là où se trouve la feuille de protection Fp. Ces trous permettent, par aspiration au moyen d'une pompe non représentée, de maintenir en place l'adhésif double face et la feuille de protection.

Lorsque l'adhésif double face Ce + Fi + Cs est en place, la demi-coquille M2 est amenée contre la demi-coquille M1 avec leurs empreintes creuses (E1, E2 respectivement) en regard, comme représenté sur le dessin. Les deux demi-coquilles sont maintenues en position par des moyens de fixation non représentés, connus de l'Homme du métier.

La demi-coquille M2 est percée de plusieurs trous d'injection non représentés sur la figure. II s'agit, là encore de manière classique en technique de moulage, d'un ensemble de trous dont certains servent à injecter la matière à mouler, en l'occurrence de la résine de silicone, et dont les autres servent à laisser partir l'air contenu dans l'empreinte creuse, au fur et à mesure du remplissage par la matière à mouler.

Au cours d'une étape suivante, le moule est rempli de résine, l'ensemble est soumis à une étape de polymérisation, la résine ayant polymérisé, l'ensemble autocollant comprenant l'adhésif double face, la feuille de protection et la pièce en résine de silicone est démoulé. Cet ensemble autocollant est soit prêt à l'emploi soit prêt à être découpé aux dimensions désirées. Pour cela il suffit d'enlever la feuille de protection Fp pour pouvoir le mettre en place sans outillage complexe et sans temps d'attente en cours de fabrication vu que l'ensemble autocollant est « prêt à coller », au contraire, comme il a été vu plus avant, des pièces en silicone dont les moyens de collage ne sont associés à la pièce qu'au moment du collage.

Dans l'exemple décrit, comme il ressort de la figure, la largeur I1 de l'empreinte creuse E1 de la demi-coquille M1 est supérieure à la largeur 12 de l'empreinte creuse E2 de la demi-coquille M2; ceci permet en plus du maintien par aspiration de l'adhésif double face, d'assurer son maintien par blocage au niveau de ses bords.

Toujours dans le cas de l'exemple décrit, le moule M est en aluminium, un matériau compatible avec le silicone, c'est-à-dire un matériau qui ne pose pas de problème de réaction chimique en particulier lors de la polymérisation de la résine de silicone. Il s'agit, avec ce choix d'un matériau compatible, d'une précaution de fabrication bien connue de l'homme du métier qui fabrique des pièces en silicone moulé.

Les dimensions transversales des demi-coquilles M1 et M2 à savoir la largeur du moule I_{M} et sa hauteur H_{M} sont respectivement de 15 cm par 3 cm.

La feuille de protection Fp et la couche d'un premier adhésif Ce, sont constituées par un film adhésif produit et commercialisé par la société 3M sous la référence VHB 9460; il s'agit d'une masse adhésive d'épaisseur constante supportée par une feuille de protection en papier siliconé.

La feuille intermédiaire Fi at la couche d'un second adhésif Cs sont constituées par un film adhésif produit par la société PROTECTIA sous la référence KAPTON 830; il s'agit d'un film en KAPTON recouvert sur une face d'un élément collant à base de silicone. Il est à noter que le film VHB9460 n'est pas à base de silicone mais, comme il ressort de ce qui précède, seule la couche Cs doit être faite d'un adhésif à base de silicone, étant entendu que l'adhésif de la couche Ce doit adhérer à la feuille Fi.

La présente invention n'est pas limitée à ce qui précède, l'adhésif double face peut être maintenu dans le moule par exemple par un collage léger ou lieu d'être maintenu par aspiration.

De même les dimensions transversales des empreintes des demi-coquilles M1, M2 peuvent être les mêmes au niveau de la jonction de ces demi-coquilles, voire même celle de la demi-coquille M2 peut être plus grande que celle de la demi-coquille M1.

Pour ce qui est des plans de jonction entre M1, M2 d'une part et R, Cs d'autre part ils peuvent être à des niveaux différents; c'est ainsi par exemple que la demi-coquille M1 peut être une simple plaque et que l'ensemble R + Cs + Fi + Ce + Fp est alors entièrement logé dans l'empreinte de la demi-coquille M2 dont les dimensions et la géométrie sont choisies en conséquence.

Quant aux différents constituants ils sont bien entendu à choisir en fonction de la pièce à réaliser et des conditions de stockage et d'emploi de cette pièce.

## Revendications

1. Procédé de fabrication d'une pièce en silicone destinée à être fixée à une autre pièce par collage, ladite pièce de silicone se présentant à la fin du procédé sous la forme d'un ensemble auto-collant **caractérisé en ce qu'**il comporte au moins les étapes suivantes :
* utiliser un moule (M) ayant une empreinte creuse (E1, E2) dont les dimensions sont sensiblement égales à celles de l'ensemble auto-collant ,
* utiliser des moyens de collage constitué d'un empilement comportant successivement au moins une feuille de protection (Fp), une couche (Ce) d'un premier adhésif, une feuille intermédiaire (Fi), et une couche (Cs) d'un deuxième adhésif , ledit deuxième adhésif étant à base de silicone,
* disposer lesdits moyens d'adhésion dans ledit moule (M), la feuille de protection (Fp) étant en contact avec une des parois de l'empreinte creuse (E1),
* introduire une résine de silicone (R) dans l'espace laissé libre à l'intérieur du moule par lesdits moyens d'adhésion.
* polymériser l'ensemble autocollant formé des moyens d'adhésion et de la résine de silicone puis le démouler.

2. Procédé selon la revendication 1 **caractérisé en ce qu'**il comporte l'utilisation de deux adhésifs de nature différente pour la première couche (Ce) et pour la deuxième couche (Cs), l'adhésif de la deuxième couche étant à base de silicone.

3. Procédé selon la revendication 1 **caractérisé en ce qu'**il comporte le-choix de deux films constitués chacun d'une feuille recouverte de colle sur l'une de ses faces, l'utilisation de l'un des deux films pour constituer la feuille de protection (Fp) et la couche (Ce) d'un premier d'adhésif et de l'autre pour constituer la feuille intermédiaire (F) et la couche (Cs) d'un second adhésif.

## Patentansprüche

1. Verfahren zur Herstellung eines Stücks aus Silikon, das an einem anderen Stück durch Kleben befestigt werden soll, wobei das Silikonstück am Ende des Verfahrens in Form einer selbstklebenden Baugruppe vorliegt, **dadurch gekennzeichnet, daß** es mindestens die folgenden Schritte umfaßt:
- Verwenden einer Form (M) mit einer hohlen Matrize (E1, E2), deren Abmessungen im wesentlichen gleich jenen der selbstklebenden Baugruppe sind,
- Verwenden von Klebemitteln, die aus einem Stapel bestehen, der nacheinander mindestens eine Schutzfolie (Fp), eine Schicht (Ce) eines ersten Klebstoffs, eine Zwischenfolie (Fi) und eine Schicht (Cs) eines zweiten Klebstoffs aufweist, wobei der zweite Klebstoff auf Silikon basiert,
- Anordnen der Haftmittel in der Form (M), wobei die Schutzfolie (Fp) mit einer der Wände der hohlen Matrize (E1) in Kontakt steht,
- Einbringen eines Silikonharzes (R) in den Raum, der im Inneren der Form von den Haftmitteln frei gelassen wird,
- Polymerisieren der selbstklebenden Baugruppe, die aus den Haftmitteln und dem Silikonharz gebildet ist, dann Entnehmen derselben aus der Form.

2. Verfahren nach Anspruch 1, **dadurch gekennzeichnet, daß** es die Verwendung von zwei Klebstoffen mit unterschiedlicher Art für die erste Schicht (Ce) und für die zweite Schicht (Cs) umfaßt, wobei der Klebstoff der zweiten Schicht auf Silikon basiert.

3. Verfahren nach Anspruch 1, **dadurch gekennzeichnet, daß** es die Wahl von zwei Filmen umfaßt, die jeweils aus einer Folie bestehen, die auf einer ihrer Flächen mit Klebstoff bedeckt ist, wobei die Verwendung des einen der zwei Filme zum Bilden der Schutzfolie (Fp) und der Schicht (Ce) eines ersten Klebstoffs und des anderen zum Bilden der Zwischenfolie (Fi) und der Schicht (Cs) eines zweiten Klebstoffs dient.

## Claims

1. Process for manufacturing a silicone part intended to be fastened to another part by adhesive bonding, said silicone part being, at the end of the process, in the form of a self-adhesive assembly, **characterized in that** it comprises at least the following steps:
* using a mould (M) having a hollow cavity (E₁, E₂), the dimensions of which are approximately equal to those of the self-adhesive assembly;
* using adhesive bonding means consisting of a stack comprising, in succession, at least a protective sheet (Fp), a layer (Ce) of a first adhesive, an intermediate sheet (Fi) and a layer (Cs) of a second adhesive, said second adhesive being silicone-based;
* placing said adhesion means in said mould (M), the protective sheet (Fp) being in contact with one of the walls of the hollow cavity (E₁);
* injecting a silicone resin (R) into the space left free inside the mould by said adhesion means; and
* curing the self-adhesive assembly, formed from the adhesion means and the silicone resin, and then demoulding it.

2. Process according to Claim 1, **characterized in that** it includes the use of two adhesives of different types for the first layer (Ce) and for the second layer (Cs), the adhesive of the second layer being silicone-based.

3. Process according to Claim 1, **characterized in that** it includes the choice of two films each consisting of a sheet coated with adhesive on one of its sides, one of the two films being used to constitute the protective sheet (Fp) and the layer (Ce) of a first adhesive and the other film being used to constitute the intermediate sheet (Fi) and the layer (Cs) of a second adhesive.
